(19) Europäisches Patentamt
European Patent Office
Office européen des brevets

(11) **EP 4 385 331 A1**

(12) **EUROPEAN PATENT APPLICATION**

(43) Date of publication:
**19.06.2024  Bulletin 2024/25**

(21) Application number: **22213614.5**

(22) Date of filing: **14.12.2022**

(51) International Patent Classification (IPC):
*A23C 7/04* (2006.01)     *A23C 9/142* (2006.01)
*A23C 11/04* (2006.01)     *A23C 13/14* (2006.01)
*A23D 7/00* (2006.01)     *A23D 7/01* (2006.01)
*A23J 1/00* (2006.01)     *A23J 1/20* (2006.01)
*A23J 1/22* (2006.01)     *A23J 3/08* (2006.01)
*A23L 29/281* (2016.01)     *A23P 30/40* (2016.01)
*A23J 3/10* (2006.01)     *A23L 9/20* (2016.01)

(52) Cooperative Patent Classification (CPC):
**A23L 29/281; A23C 9/1422; A23C 9/1425;
A23C 13/14; A23D 7/0053; A23J 1/202; A23J 3/10;
A23L 9/22; A23P 30/40**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Inleit Ingredients SLU
15310 A Coruña (ES)**

(72) Inventors:
• **SNAPPE, Jean-Jacques
  62149 Festubert (FR)**
• **MARRON ABASCAL, Diego
  28034 Madrid (ES)**
• **DURANTEZ MELGAR, Juan Manuel
  34002 Palencia (ES)**

(74) Representative: **Argyma
14 Boulevard de Strasbourg
31000 Toulouse (FR)**

(54) **PROCESS FOR MANUFACTURING A CULINARY CREAM AND A CREAMER**

(57)     A (first) volume of a compound, of a group (15) comprising cream from milk, a vegetable fat in the liquid state and water, is mixed (4) with emulsifying micellar caseins (3), obtained from a (second) volume of skimmed milk (5), with caseins, which has been subjected to a chemical treatment (11) to solubilize the mineral elements of the caseins and to a membrane filtration (8, 9), to obtain a culinary cream or a creamer.

[Fig. 4]

EP 4 385 331 A1

**Description**

**TECHNICAL FIELD**

The field of the invention is that of culinary creams and creamers. Culinary cream means an animal or dairy cream, a vegetable cream, obtained from vegetable fats, vegetable oil, a mixture of dairy fat and vegetable fat, in particular whipped cream. By creamer, we mean a mixture of fats, proteins and exogenous agents, in the form of powder or liquid such as an emulsion of oil and water mixed with an emulsifying protein additive.

Cream, to take this example, comprises one of the major components of whole milk, fat, and is obtained by skimming it in a cream separator-centrifuge, sometimes by decantation.

**SUMMARY**

More particularly, dairy creams, and namely the sterilized creams, are distinguished from acid or matured creams obtained after lactic fermentation and which are viscous and thick and do not need emulsifying proteins for their stabilization. These acid creams are for specific uses.

It will be noted that if matured creams are fermented with, in general, 30% fat, yoghurts, on the other hand, are only fermented with 1.5 to 3.5% fat.

Dairy creams, and namely the sterilized creams, require emulsifying proteins for their stabilization.

These are unstable neutral pH products. They must therefore be mixed with emulsifying proteins.

There are different types of dairy cream. In addition to raw cream, we can cite pasteurized cream, UHT cream, liquid cream, heavy cream, fresh cream, whipped cream, whipped cream, cream with a protected designation of origin (PDO), sour cream.

Dairy creams can have multiple and varied uses:

- overrun, for example, to make whipped cream;

- make sauces or serve for cooking food;

- prepare cooked meals;

- etc.

All these creams must be stabilized and, for those which are overrun, or whipped, have an adequate level of whipping maintained over time, for the others, allow any culinary use.

Until today, caseinates have been used for this purpose, in particular sodium caseinates, the particularity of which is to have a high emulsifying power.

Caseinates are produced in two particularly chemical steps.

The first step is a sudden acidification of hot skimmed milk, for example with hydrochloric acid (HCL), resulting in precipitation of proteins, in particular caseins.

The second step, after separation and washing of the precipitate, is a neutralization, generally liquid, of the acid caseins, often with sodium hydroxide (NaOH). In the rarer case of dry neutralization, it is to obtain extruded caseins of lower quality.

As a reminder, the emulsifying power is based on amphoteric molecules with a hydrophilic end, placed at the interface of the emulsion with the aqueous phase, and a hydrophobic end, placed at the interface of the emulsion with the fat.

An imperfect emulsion is namely due to the fact that the layer covering the fat is not continuous, leaves uncovered areas, which causes creaming, that is to say a rise to the surface of fat because of its low density (0.9 kg / I).

Conversely, an almost perfect emulsion corresponds to a fat coverage of 100%, or almost, and also to an excessively reduced size of the fat globules, which, moreover, promotes long-term stability of about six months, all the more acquired as the covering layer is thin.

Due to the eminently chemical nature of the manufacturing steps of caseinates, they are criticized for not being natural elements and they are, in this respect, discredited by consumers.

The applicant therefore raised the problem of replacing caseinates with other additives with high emulsifying power, additives not only to dairy creams, but to all culinary creams as well as creamers.

To this end, the invention of the present application relates first of all to a process for the manufacture of an element of the group comprising a culinary cream and a creamer, in which

- one takes a first volume of a compound of the group comprising cream from milk, a vegetable fat in the liquid state and water,

- the compound of the first volume is mixed with an emulsifying additive and

- said element is obtained,

process characterized by the fact that:

- one takes a second volume of milk that has been skimmed and contains caseins,

- the second volume of skimmed milk is subjected to a chemical treatment to solubilize the mineral elements of the caseins and to a membrane filtration to obtain emulsifying micellar caseins, then

- the compound of the first volume is mixed with the emulsifying micellar caseins from the second volume of treated and filtered milk to obtain said element.

The process of the invention, which preferably uses cow's milk, therefore comprises only natural steps. As for the concentrate of membrane proteins obtained by membrane filtration, it has the same emulsifying properties as caseinates.

The chemical treatment of the second volume of milk consists in extracting the calcium from the casein micelles by acidification of the milk, with natural acids, for example by carbon dioxide ($CO_2$) and possibly by the phosphoric acids and also other organic acids, or by calcium chelating agents. As a result, the milk salts originally found in the micelles are solubilized. The milk demineralizes, the salts leave the proteins and a new protein concentrate is obtained from which a large part of the calcium has left in the filtration permeate.

The quality of the culinary cream obtained by the process of the invention, thanks to the functionalization of caseins, is much better than with unmodified caseins.

Preferably, by the chemical treatment, it is possible to reduce the caseins of the second volume of milk into micelles of less than 200 nm in diameter and to alter their molecular structure and make it more flexible in order to present a greater covering power.

Chemical treatment, but only called chemical, has little to do with the chemical treatment used to manufacture caseinates, as presented above.

The chemical treatment step of the present application may consist in only adding small amounts of acid since the structure of the proteins is greatly preserved in order to precisely be able to filter them on membranes.

After that, one can even carry out a slight neutralization, without altering the natural character of the culinary cream thus obtained.

Another advantage of the invention of the present application lies here in the ability, due to the conservation of the protein structure, to be able to produce again milk from the cream obtained, which is impossible with caseinates, the structure of the proteins being then changed in an irreversible way.

In the preferred implementation of the process of the invention, the membrane filtration is a microfiltration. It is a filtration under low pressure, with a membrane structure allowing the components dissolved in the aqueous phase of the milk, such as mineral elements and lactose and also soluble proteins, to pass through.

In a particular implementation of the process of the invention, the second volume of milk is subjected to ultrafiltration in order to be able to concentrate the proteins at a desired level.

This ultrafiltration step can be implemented anywhere in the chain processing the second volume of milk, preferably, however, before microfiltration.

In the particular implementation of the process of the invention for making a culinary dairy cream,

- one takes a first volume of milk that has been skimmed and raw cream is obtained,

- the raw cream is mixed with an emulsifying additive and

- the culinary dairy cream is obtained,

process characterized by the fact that:

- a second volume of milk that has been skimmed and contains caseins is provided,

- the second volume of skimmed milk is subjected to a chemical treatment to solubilize the mineral elements of the caseins and to a membrane filtration to obtain emulsifying micellar caseins, then

- the cream of the first volume of milk is mixed with the emulsifying micellar caseins from the second volume of treated and filtered milk to obtain said culinary dairy cream.

In another particular implementation of the process of the invention for making a culinary vegetable cream,

- one takes a first volume of vegetable fat in the liquid state and water,

- it is mixed with an emulsifying additive and

- an emulsion and therefore the culinary vegetable cream are obtained,

process characterized by the fact that:

- one takes a second volume of milk that has been skimmed and contains caseins,

- the second volume of skimmed milk is subjected to a chemical treatment to solubilize the mineral elements of the caseins and to a membrane filtration to obtain emulsifying micellar caseins, then

- the first volume of vegetable fat in the liquid state and water is mixed with the emulsifying micellar caseins from the second volume of treated and filtered milk to obtain the culinary vegetable cream.

Even more particularly, to manufacture a culinary cream according to the process of the invention,

- one takes a first volume of vegetable fat in the liquid state and water,

- one takes a second volume of milk that has been skimmed and cream is obtained,

- the said first volume of vegetable fat and water and the cream are mixed with an emulsifying additive and

- culinary cream is obtained,

process characterized by the fact that:

- one takes a third volume of milk that has been skimmed and contains caseins,

- the third volume of skimmed milk is subjected to a chemical treatment to solubilize the mineral elements of the caseins and to a membrane filtration to obtain emulsifying micellar caseins then

- the first volume of vegetable fat in the liquid state and water and the cream are mixed with the emulsifying micellar caseins from the third volume of treated and filtered milk to obtain the culinary cream.

Finally, to manufacture a creamer, according to an implementation of the general process of the invention,

- one takes a first volume of liquid vegetable fat and water,

- it is mixed with an emulsifying protein additive and

- the creamer is obtained,

process characterized by the fact that:

- one takes a second volume of milk that has been skimmed and contains caseins,

- the second volume of skimmed milk is subjected to a chemical treatment to solubilize the mineral elements of the caseins and to a membrane filtration to obtain emulsifying micellar caseins, then

- the first volume of the liquid vegetable fat and water is mixed with the emulsifying micellar caseins from the second volume of treated and filtered milk to obtain the creamer.

It should be noted that the chemical treatment can be carried out using acid and/or chelating agents, or any other food chemical means such as phosphate salts, citrate salts or Glucono Delta Lactone.

Similarly, the volume of transformed milk can be subjected to a chemical treatment before, during or after the membrane filtration.

Skimmed milk can, according to the invention, be pasteurized.

The casein concentrate obtained after filtration can be subjected to evaporation to obtain a concentrate with a high dry matter content of milk caseins, then dried to obtain a powder of micellar caseins.

The culinary cream obtained by the process of the invention can be pasteurized or sterilized.

The invention of the present application also relates to the culinary cream and the creamer obtained by the manufacturing process of the invention.

## BRIEF DESCRIPTION OF THE DRAWINGS

The invention will be better understood using the following description, with reference to the attached drawings, in which

[Fig. 1] Figure 1 is a table of the proteins tested, before production of the culinary cream of the invention;

[Fig. 2] Figure 2 is a table of the proteins analyzed;

[Fig. 3] Figure 3 is a graph of the hydration rates of the proteins analyzed and

[Fig. 4] Figure 4 is a block diagram of the process for manufacturing the culinary cream of the invention.

## DETAILED DESCRIPTION

The problem at the origin of the invention of the present application having been to replace the caseinates by other proteins, on the one hand, and the preamble above of this description already addressing relatively in depth the process manufacturing a culinary cream and a creamer, on the other hand, the really descriptive part of the description which will follow will be especially devoted to the presentation of the tests of control proteins to appreciate the behavior of these proteins and to compare it with that of caseinates, the tests having been carried out first in a water-protein matrix, then in a culinary cream, these last tests in a complex matrix therefore being briefly discussed at the end.

To fully understand the behavior of proteins, their structural study, developed by spectral methods such as mid-infrared (MIR) and fluorescence, will be presented, starting first with the study of the emulsifying and foaming properties of proteins, in a water-protein matrix, culinary creams requiring emulsifying and foaming proteins.

A) Protein sampling

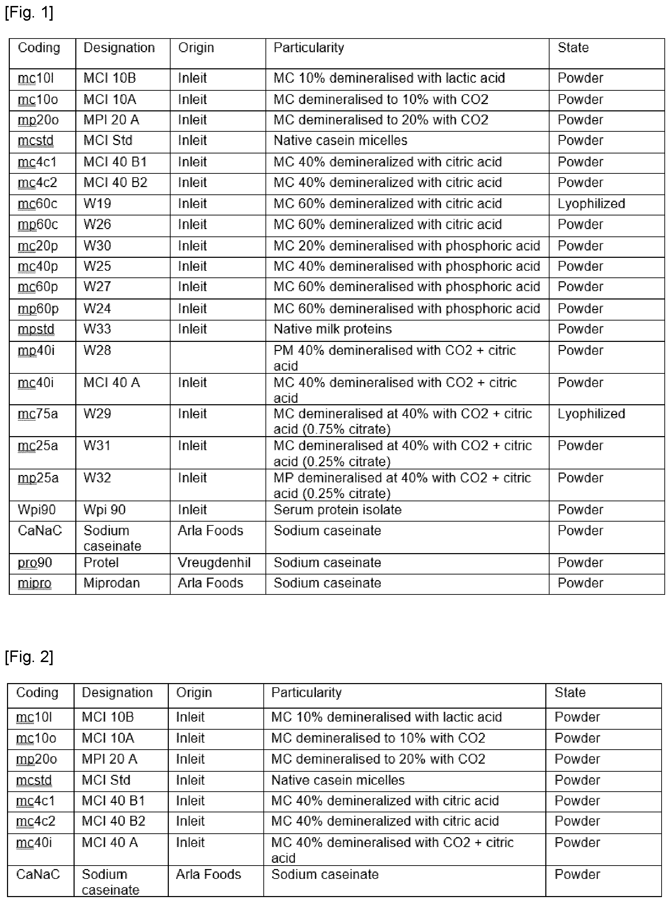

Proteins from the applicant (Inleit) and other manufacturers, in powder form obtained by spray drying or freeze-dried, from the table of Figure 1, were tested.

Only the proteins in the table of FIG. 2 were analyzed.

To ensure their functionality, the proteins have been suitably solubilized, according to the following preparation.

Each protein powder is weighed to have 5 g of protein.

100 ml of distilled water is heated to 50°C and once at 50°C, the protein powder is added with stirring. During solubilization, the formation of a foam is avoided.

The mixture is kept with stirring at 50° C. for 1 hour. After the protein solubilization phase, we finish with a cooling step with stirring for 1 hour.

The protein hydration rate was determined according to the following protocol:

Approximately 20 g of protein solution are weighed into a centrifuge tube at room temperature without pH adjustment.

The tubes are placed in the centrifuge and the centrifugation parameters are introduced.

After centrifugation, the supernatant of each tube is recovered and weighed. The supernatant is collected in a single gesture to avoid biasing the results, by turning the centrifugation tube sharply in an empty tared beaker and then weighing the mass of the supernatant.

The calculation of the hydration rate is established by the following expression:

$$Hydratation\ rate = \frac{Amount\ of\ supernatant\ (g)}{Initial\ amount\ of\ solution\ (g)}$$

The sample is well hydrated if the average hydration rate according to the standard approach is equal to 96%.

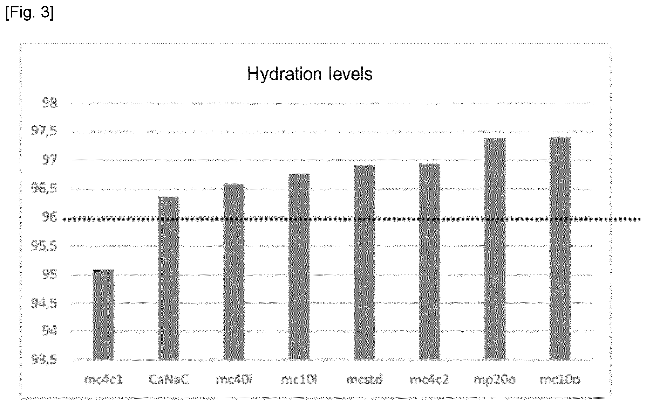

The results are recorded in the table in Figure 3. It can therefore be seen that all of these proteins are well soluble in water.

The ability of a protein to be adsorbed at the air-water or oil-water interface and to form a cohesive and rigid film there while stabilizing the foam or emulsion formed over time defines its foaming capacity / emulsifier. This power is important to avoid the adsorption of unwanted molecules.

To this end, to determine the foaming power of the proteins tested, the method below was implemented:

- Prepare a 5% protein solution according to the protocol for solubility;

- Place and stick on a 250 ml beaker a piece of graph paper;

- Weigh 50 g of a reconstituted 5% solution into the 250 mL beaker;

- Mark on the graph paper with a line the level of the solution = Iligh (initial liquid height);

- Place the rod of the ultraturrax in the middle of the beaker, being careful not to touch the bottom of the beaker;

- Start the ultraturrax on position 1 and immediately start the stopwatch;

- Gradually increase the speed until you reach speed 16 (16000rpm);

- At 6 minutes, turn off the ultraturrax;

- Start the stopwatch for monitoring the follow-up of the foam;

- Mark on the paper on the beaker the height reached by the foam (Fht=0 = Foam height at t=0) and the height of the liquid (Hliqt=0);

- Monitor the different levels reached by the foam and the liquid every 15 minutes for 1 hour.

The foaming capacity and stability are calculated according to the following equations:

$$Foaming\ capacity = \frac{Fht = 0 - Hliq\ i}{Hliq\ i}\ X\ 100 \qquad Foaming\ stability = \frac{Fht = x}{Fht = 0}\ X\ 100$$

The proteins mpstd, mc25a, wpi90 have been found to have the best foaming powers because they have equal or greater capacity than sodium caseinate CaNaC.

To determine the emulsifying power of the proteins tested, the method below was implemented:

- Prepare a 1% protein solution;
- Introduce 80% protein solution in a beaker and 20% oil;
- Place the beaker so that the stem of the ultraturrax is one-third immersed in the liquid;
- Homogenize for 5 min at 15,000 rpm;
- Take 50 $\mu$l of emulsion with an automatic pipette and very gently introduce it into a tube containing 5 ml of 0.1% SDS (Sodium Dodecyl Sulfate). The SDS will act as a dispersant/stabilizer to prevent flocculation;
- The absorbance is measured at t=0 and t=10 min with a spectrophotometer at 500 nm taking the SDS solution as the blank. Emulsifying capacity and stability are determined by these equations:

$$Emulsifying\ capacity = \frac{2\mathcal{E}(10\exp(-4))}{rho * c}\ X\ 100 \qquad Emulsifying\ stability = \frac{A0}{Ao - At}\ X\ \Delta T$$

With $\varepsilon=(2.303N*A_0)/L$

N: the degree of dilution (100)
Rho: the volumetric fraction of the oil before emulsification
L: the length of the optical path
C: the concentration of the protein solution
$\Delta T$: 10 min = time difference between Ao and At

The mc10o, mp20o and mc4c2 samples gave the best results.

The structural study provided a good understanding of the emulsifying and foaming properties of the protein samples.

B) Study by infrared medium (IRM)

It is a non-destructive and non-intrusive technique, which relies on the absorption of light by molecules in the infrared region, converting this absorption into molecular vibration. This absorption corresponds specifically to the bonds present in the molecule. With a spectrometer, this absorption of infrared radiation by the material of the sample is measured as a function of the wavelength (3000 to 900 cm-1 in the medium).

The result is a spectrum that gives a distinctive "chemical fingerprint" that can be used to visualize and identify organic and inorganic samples.

The IRM is the most information-rich part of the spectrum.

The absorption bands observed in the IRM give information about the structures of molecules, such as proteins.

It was thus possible to verify that a majority of the proteins in the table in figure 3 had a secondary structure close to that of caseinates and therefore of the same functionality.

C) Study by fluorescence

Fluorescence is a light emission caused by the excitation of electrons in a molecule, generally by absorption of a photon.

A fluorescent molecule (fluorophore) has the property of absorbing light energy (excitation light) and quickly releasing it in the form of fluorescent light (emission light). Once the energy of the photon has been absorbed, the molecule is then in an electronically excited state, denoted S1. The return to the ground state (denoted S0) can then be done by fluorescence. The light re-emitted by the molecule excited during the fluorescence can be of the same wavelength (resonance fluorescence) or of longer wavelength, even sometimes shorter (two-photon absorption).

Not all molecules are fluorescent and therefore there are also extrinsic fluorophores which have affinities with certain molecules.

In the case of proteins, tryptophan (Trp), an aromatic amino acid, is an intrinsic fluorophore characterized by an emission spectrum between 305 and 490 nm and an excitation wavelength at 290 nm. The fluorescence spectrum obtained makes it possible to estimate the hydrophobic nature of the environment of the Trp residue contained in the molecule. ANS is an extrinsic fluorophore with a strong affinity with proteins and provides information on the surface hydrophobicity of the molecule. It is 8-anilino-1-naphthalene sulfonic acid.

It was found that the mc75a protein, which has the lowest surface hydrophobicity, was closest to the caseinates and therefore has the same hydrophobic character as the latter.

The tests of proteins in a complex matrix, namely a culinary cream, will now be discussed, proteins having given good results in emulsification and expansion.

We started by making cream, from 979.6 g of a 35% fat (F) cream, to which we added 0.4 g of carrageenan and 20 g of protein, all per kg.

The 35% fat cream was obtained in the mixer, the proteins added after heating to 50°C, the carrageenans added after heating to 80°C.

The whole was pasteurized at 80° C. for 10 min. Then the cream was homogenized at 180 bars and 30 bars, before being cooled to 10°C. After conditioning, it was aged at 4°C for 24 hours.

A control cream, without proteins, was produced in order to check whether the cream alone can hold in stability and overrun capacity.

The choice of proteins fell on those with positive foaming and emulsifying powers.

After production of the cream, its firmness, before overrun, was determined then, after overrun, its degree of overrun.

It has been found that the samples which gave the best results in culinary creams are those which, at the end of the IRM study, were close to caseinates.

Of all the studies, it appears that the mc75a protein is closest to the caseinates in terms of hydrophobicity and secondary structure. Its overrun rate is the best after that of caseinates.

Among the proteins tested, the most stable were mp25a, mc60c, mc20p (stable for 24 hours without exudate), and mc25a, mc60p and mc4c2.

On the strength of the results of the studies carried out and which have just been presented, the applicant therefore proposes its invention of the process for manufacturing dairy cream, the various steps of which have been discussed in the preamble above and which will be recalled below. below in a global process, although they are not all essential.

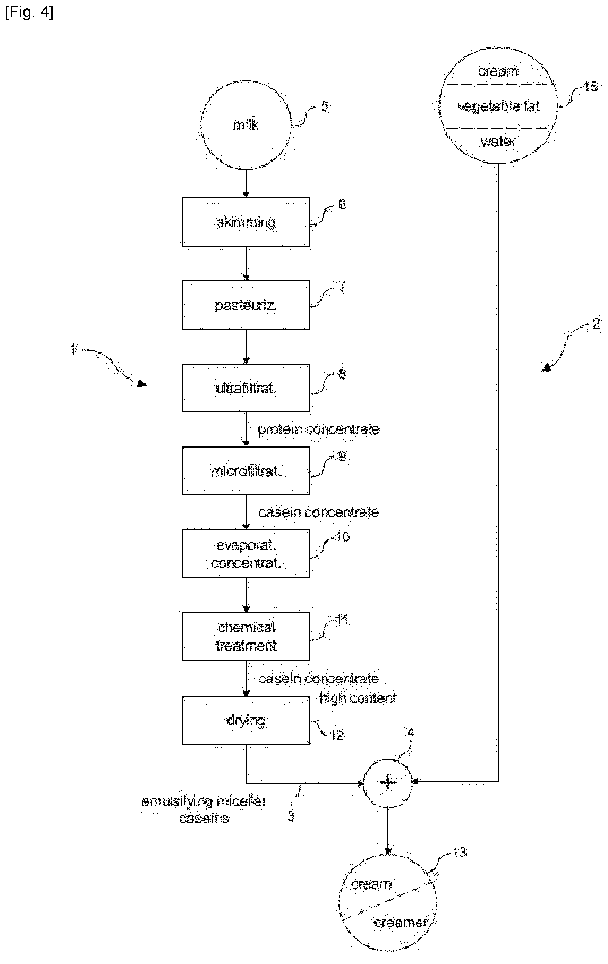

With reference to Figure 4, representing the block diagram of the steps of the process of the invention, this diagram comprises two branches, one 1, that of the milk 5, more detailed than the other 2 which starts from one of the compounds of group 15 comprising cream from milk, oil and water. Branch 1 starting from milk and comprising the characteristic steps of the process of the invention applies regardless of the starting compound of the other branch 2.

Branch 1 of the milk makes it possible, at the end, to obtain emulsifying micellar caseins 3 which are mixed (4), as an emulsifying additive, with a first volume of the starting compound of branch 2 to obtain the culinary cream or the creamer.

Milk branch 1 of the culinary cream or creamer manufacturing process

We therefore start with whole milk, for example cow's milk, from tank 5 from which a second volume has been extracted, the first volume being that of the starting compound of branch 2.

The milk from tank 5 is skimmed 6. Incidentally, the raw cream produced by skimming can be one of said starting compounds from branch 2 when one wants to make dairy cream.

The skimmed milk is then pasteurized 7 then subjected, here, to an ultrafiltration 8 which produces a milk protein concentrate.

The two skimming and pasteurization steps could be inverted and even merged.

This protein concentrate is subjected to a microfiltration 9 which produces a casein concentrate.

The casein concentrate is then subjected to evaporation or concentration under vacuum 10, before undergoing a chemical treatment 11 to extract the calcium from the casein micelles.

It will be noted that this chemical treatment could be undertaken before or after the filtration steps, or even during these membrane filtration steps and even at the start. This chemical treatment is intended to produce a concentrate with a high content of emulsifying micellar caseins which, after drying 12, will be mixed, in powder form, with the starting compound of branch 2 of the process, to finally obtain the culinary cream or the creamer with high emulsifying power and without caseinates that we wanted to manufacture 13.

It is important to note that the chemical treatment can be carried out using acid, chelating agents or by both at the same time, or salts, agents such as Glucono Delta Lactose.

After the chemical treatment, the transformed milk can advantageously be subjected to a slight neutralization.

When starting, in the second branch 2, with cream, it is preferable to use the emulsifying micellar caseins as a powder, as illustrated in Figure 4; it is however possible to use them also in a liquid state to mix them with the cream.

To obtain a culinary vegetable cream, one starts, in the second branch 2, with a volume of vegetable fat in the liquid state and water before mixing it with the emulsifying additive 3.

We can start from a solid block of vegetable fat that is heated to around 50-60°C to transform it into a liquid. It can then be palm fat, palm kernel, coconut.

You can also start with vegetable oil, for example from rapeseed, sunflower, etc.

When starting, in the second branch 2 with liquid vegetable fat, for example vegetable oil and cream, the cream then comes from a volume of milk called second volume of milk, the volume of milk with which it is started in the first branch 1 being no longer designated "second volume" but "third volume of milk".

After having obtained the culinary cream or the creamer, they can be pasteurized or sterilized.

It should be noted that the chemical treatment of milk can be carried out by Glucono Delta Lactose which is transformed into gluconic acid in an aqueous medium. The salts found in the casein micelles are thus solubilized.

The chemical treatment of milk can also be carried out by salts of phosphates, citrates or their combination.

By the chemical treatment of the milk, the size and volumic mass of the casein micelles are reduced. More particularly, they are reduced from micelles of 200 nm in diameter and the molecular structure of these caseins is altered to increase their covering power. It is even possible to reduce the micelles to the state of monomers and reduce their volumic mass to a few tens of $10^7$g/mole.

The cream obtained from the skimming machine generally comprises about 40% of fat. By standardization, it could be reduced to 30% of fat. However, those transforming these creams may also reduce them to 30, 25, 20, 15 and even 12% of fat by addition of skimmed milk or because the additions within the formulations lead to a reduction of the rate of fat (due to the dilution with the addition of the other compounds).

**Claims**

1. A process for manufacturing an element of the group (13) comprising a culinary cream and a creamer, in which:

   - one takes a first volume of a compound of group (15) comprising cream from milk, a vegetable fat in the liquid state and water,
   - the compound of the first volume (15) is mixed with an emulsifying additive (3) and
   - said element (13) is obtained,

   process **characterized by** the fact that:

   - one takes a second volume of milk (5) which has been skimmed (6) and contains caseins,
   - the second volume of skimmed milk is subjected to a chemical treatment (11) to solubilize the mineral elements of the caseins and to a membrane filtration (8, 9) to obtain emulsifying micellar caseins (3), then
   - the compound (15) of the first volume is mixed (4) with the emulsifying micellar caseins (3) from the second volume of milk (5) treated and filtered to obtain said element (13).

2. Process for the manufacture of a culinary dairy cream according to claim 1, according to which:

   - one takes a first volume of milk that has been skimmed and raw cream is obtained (15),
   - the raw cream (15) is mixed (13) with an emulsifying additive (3) and
   - culinary dairy cream (13) is obtained,

   process **characterized by** the fact that:

   - one takes a second volume of milk (5) which has been skimmed (7) and contains caseins,
   - the second volume of skimmed milk (5) is subjected to a chemical treatment (11) to solubilize the mineral elements of the caseins and to a membrane filtration (8, 9) to obtain emulsifying micellar caseins (3), then
   - the cream (15) of the first volume of milk is mixed (4) with the emulsifying micellar caseins (3) from the second volume of milk (5) treated and filtered to obtain the culinary dairy cream (13).

3. Process for the manufacture of a culinary vegetable cream according to claim 1, according to which:

   - one takes a first volume of vegetable fat in the liquid state and water (15),
   - it is mixed with an emulsifying additive (3) and
   - an emulsion and therefore the culinary vegetable cream (13) is obtained,

   process **characterized by** the fact that:

   - one takes a second volume of milk (5) which has been skimmed (6) and contains caseins,
   - the second volume of skimmed milk (5) is subjected to a chemical treatment (11) to solubilize the mineral elements of the caseins and to a membrane filtration (8, 9) to obtain emulsifying micellar caseins (3), then
   - the first volume of vegetable fat in the liquid state and water (15) is mixed with the emulsifying micellar caseins (3) from the second volume of treated and filtered milk (5) to obtain the culinary vegetable cream (13).

4. Process for manufacturing a culinary cream according to claim 1, according to which:

   - one takes a first volume of vegetable fat in the liquid state and water (15),
   - one takes a second volume of milk (5) which has been skimmed and cream is obtained,
   - the said first volume of vegetable fat and water (15) and the cream (5) are mixed with an emulsifying additive (3) and
   - culinary cream (13) is obtained,

   process **characterized by** the fact that:

   - one takes a third volume of milk (5) which has been skimmed (6) and contains caseins,
   - the third volume of skimmed milk (5) is subjected to a chemical treatment (11) to solubilize the mineral elements of the caseins and to a membrane filtration (8, 9) to obtain emulsifying micellar caseins (3), then

- the first volume of vegetable fat in the liquid state and water and the cream (15) are mixed with the emulsifying micellar caseins (3) from the third volume of treated and filtered milk (5) to obtain the culinary cream (13).

5. Process for manufacturing a creamer according to claim 1, according to which:

- one takes a first volume of liquid vegetable fat and water (15),
- it is mixed (4) with an emulsifying protein additive (3) and
- the creamer (13) is obtained,

process **characterized by** the fact that:

- one takes a second volume of milk (5) which has been skimmed (6) and contains caseins,
- the second volume of skimmed milk (5) is subjected to a chemical treatment (11) to solubilize the mineral elements of the caseins and to a membrane filtration (8, 9) to obtain emulsifying micellar caseins (3), then
- the first volume (15) of the liquid vegetable fat and water emulsion is mixed (4) with the emulsifying micellar caseins (3) from the second volume of milk (5) treated and filtered to obtain the creamer (13).

6. Process according to one of claims 1-5, wherein the chemical treatment (11) is carried out by acid.

7. Process according to one of claims 1 to 6, wherein the chemical treatment (11) is carried out by chelating agents.

8. Process according to one of claims 1 to 7, wherein the volume of skimmed milk which is subjected to chemical treatment is before filtration.

9. Process according to one of claims 1 to 8, wherein the volume of skimmed milk which is subjected to chemical treatment is during membrane filtration.

10. Process according to one of claims 1 to 9, wherein, by the chemical treatment (11), the caseins of the volume of milk (5) are reduced from micelles of 200 nm in diameter and the molecular structure of these caseins is altered to increase their covering power.

11. Process according to one of claims 1 to 10, wherein, after the chemical treatment (11), the volume of treated milk is slightly neutralized.

12. Process according to one of claims 1 to 11, wherein the membrane filtration is a microfiltration (9).

13. Process according to one of claims 1 to 12, wherein the filtration, to which the volume of milk is subjected, comprises ultrafiltration (10).

14. Process according to claim 13, in which the ultrafiltration (8) is carried out just before the membrane filtration (9).

15. Process according to one of claims 1 to 14, wherein the volume of treated milk (5) is dried (12) before being mixed.

16. Culinary cream manufactured according to the process of one of claims 1-4, 6-15.

17. Creamer manufactured according to the process of one of claims 5-15.

[Fig. 1]

| Coding | Designation | Origin | Particularity | State |
|---|---|---|---|---|
| mc10l | MCI 10B | Inleit | MC 10% demineralised with lactic acid | Powder |
| mc10o | MCI 10A | Inleit | MC demineralised to 10% with CO2 | Powder |
| mp20o | MPI 20 A | Inleit | MC demineralised to 20% with CO2 | Powder |
| mcstd | MCI Std | Inleit | Native casein micelles | Powder |
| mc4c1 | MCI 40 B1 | Inleit | MC 40% demineralized with citric acid | Powder |
| mc4c2 | MCI 40 B2 | Inleit | MC 40% demineralized with citric acid | Powder |
| mc60c | W19 | Inleit | MC 60% demineralized with citric acid | Lyophilized |
| mp60c | W26 | Inleit | MC 60% demineralized with citric acid | Powder |
| mc20p | W30 | Inleit | MC 20% demineralised with phosphoric acid | Powder |
| mc40p | W25 | Inleit | MC 40% demineralised with phosphoric acid | Powder |
| mc60p | W27 | Inleit | MC 60% demineralised with phosphoric acid | Powder |
| mp60p | W24 | Inleit | MC 60% demineralised with phosphoric acid | Powder |
| mpstd | W33 | Inleit | Native milk proteins | Powder |
| mp40i | W28 | | PM 40% demineralised with CO2 + citric acid | Powder |
| mc40i | MCI 40 A | Inleit | MC 40% demineralised with CO2 + citric acid | Powder |
| mc75a | W29 | Inleit | MC demineralised at 40% with CO2 + citric acid (0.75% citrate) | Lyophilized |
| mc25a | W31 | Inleit | MC demineralised at 40% with CO2 + citric acid (0.25% citrate) | Powder |
| mp25a | W32 | Inleit | MP demineralised at 40% with CO2 + citric acid (0.25% citrate) | Powder |
| Wpi90 | Wpi 90 | Inleit | Serum protein isolate | Powder |
| CaNaC | Sodium caseinate | Arla Foods | Sodium caseinate | Powder |
| pro90 | Protel | Vreugdenhil | Sodium caseinate | Powder |
| mipro | Miprodan | Arla Foods | Sodium caseinate | Powder |

[Fig. 2]

| Coding | Designation | Origin | Particularity | State |
|---|---|---|---|---|
| mc10l | MCI 10B | Inleit | MC 10% demineralised with lactic acid | Powder |
| mc10o | MCI 10A | Inleit | MC demineralised to 10% with CO2 | Powder |
| mp20o | MPI 20 A | Inleit | MC demineralised to 20% with CO2 | Powder |
| mcstd | MCI Std | Inleit | Native casein micelles | Powder |
| mc4c1 | MCI 40 B1 | Inleit | MC 40% demineralized with citric acid | Powder |
| mc4c2 | MCI 40 B2 | Inleit | MC 40% demineralized with citric acid | Powder |
| mc40i | MCI 40 A | Inleit | MC 40% demineralised with CO2 + citric acid | Powder |
| CaNaC | Sodium caseinate | Arla Foods | Sodium caseinate | Powder |

[Fig. 3]

[Fig. 4]

Europäisches
Patentamt

European
Patent Office

Office européen
des brevets

# EUROPEAN SEARCH REPORT

Application Number

EP 22 21 3614

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KOMMINENI ANIL ET AL: "Calcium-Reduced Micellar Casein Concentrate-Physicochemical Properties of Powders and Functional Properties of the Dispersions", FOODS, vol. 11, no. 10, 10 May 2022 (2022-05-10), page 1377, XP093040074, DOI: 10.3390/foods11101377 * 2.3.4 Emulsifying capacity and emulsifying stability; figure 1; table 3 * | 1-17 | INV. A23C7/04 A23C9/142 A23C11/04 A23C13/14 A23D7/00 A23D7/01 A23J1/00 A23J1/20 A23J1/22 A23J3/08 A23L29/281 A23P30/40 |
| X | US 2020/345027 A1 (CUSTINNE MARC JACQUES CHRISTIAN MAURICE [NL] ET AL) 5 November 2020 (2020-11-05) * claims 1-17 * | 16 | A23J3/10 A23L9/20 |
| X | US 2016/374360 A1 (MERRILL RICHARD K [US] ET AL) 29 December 2016 (2016-12-29) * claims 1,20,21 * | 17 | |
| X | DATABASE GNPD [Online] MINTEL; 5 October 2022 (2022-10-05), anonymous: "Organic Fresh Whipping Cream", XP093041293, Database accession no. 9954114 * the whole document * | 16 | TECHNICAL FIELDS SEARCHED (IPC) A23C C11C A23L A23P A23D A23J |

-/--

The present search report has been drawn up for all claims

| Place of search | Date of completion of the search | Examiner |
|---|---|---|
| Munich | 28 April 2023 | Steiner Ribeiro G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

**EP 22 21 3614**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LAZZARO FANNY ET AL: "Gradual disaggregation of the casein micelle improves its emulsifying capacity and decreases the stability of dairy emulsions", FOOD HYDROCOLLOIDS, ELSEVIER BV, NL, vol. 63, 28 August 2016 (2016-08-28), pages 189-200, XP029811739, ISSN: 0268-005X, DOI: 10.1016/J.FOODHYD.2016.08.037 * page 190 – paragraph 001 * ----- | 7 | |

**TECHNICAL FIELDS SEARCHED (IPC)**

The present search report has been drawn up for all claims

| Place of search | Date of completion of the search | Examiner |
|---|---|---|
| Munich | 28 April 2023 | Steiner Ribeiro G. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 21 3614

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2023

| Patent document cited in search report | | | Publication date | Patent family member(s) | | | Publication date |
|---|---|---|---|---|---|---|---|
| US 2020345027 | A1 | | 05-11-2020 | CN | 111601511 | A | 28-08-2020 |
| | | | | EP | 3740082 | A1 | 25-11-2020 |
| | | | | KR | 20200104914 | A | 04-09-2020 |
| | | | | US | 2020345027 | A1 | 05-11-2020 |
| | | | | WO | 2019138021 | A1 | 18-07-2019 |
| US 2016374360 | A1 | | 29-12-2016 | AU | 2016285416 | A1 | 01-02-2018 |
| | | | | BR | 112017028300 | A2 | 11-09-2018 |
| | | | | CA | 2990730 | A1 | 05-01-2017 |
| | | | | CN | 107920544 | A | 17-04-2018 |
| | | | | EP | 3313191 | A1 | 02-05-2018 |
| | | | | JP | 2018518979 | A | 19-07-2018 |
| | | | | KR | 20180054559 | A | 24-05-2018 |
| | | | | PH | 12018500012 | A1 | 04-02-2019 |
| | | | | US | 2016374360 | A1 | 29-12-2016 |
| | | | | WO | 2017003708 | A1 | 05-01-2017 |
| | | | | ZA | 201800362 | B | 19-12-2018 |

EPO FORM P0459

For more details about this annex : see Official Journal of the European Patent Office, No. 12/82